# EUROPEAN PATENT SPECIFICATION

(11) **EP 4 107 235 B1**
(45) Date of publication and mention of the grant of the patent: **02.08.2023**
(21) Application number: 21705517.7
(22) Date of filing: 16.02.2021
(51) Int. Cl.: C10H 1/00

(54) **METHOD OF PREPARING ACETYLENE**
VERFAHREN ZUR HERSTELLUNG VON ACETYLEN
PROCÉDÉ DE PRÉPARATION D'ACÉTYLÈNE

(30) Priority: 20.02.2020 EP 20158505
(43) Date of publication of application: 28.12.2022
(73) Proprietor: Shell Internationale Research Maatschappij B.V., 2596 HR The Hague (NL)
(72) Inventor: KUMAR, Dharmesh, Doha (QA); URADE, Vikrant Nanasaheb, Bangalore North 562149 (IN); VAN BAVEL, Alexander Petrus, 1031 HW Amsterdam (NL); VAN DER MADE, Alexander Willem, 1031 HW Amsterdam (NL)
(74) Representative: Shell Legal Services IP
(86) International application number: PCT/EP2021/053703
(87) International publication number: WO 2021/165224

(56) References cited:
- EP-A1- 3 029 016
- JAMES R. FINCKE ET AL: "Plasma Pyrolysis of Methane to Hydrogen and Carbon Black", INDUSTRIAL & ENGINEERING CHEMISTRY RESEARCH, vol. 41, no. 6, 1 March 2002 (2002-03-01), pages 1425-1435, XP055053220, ISSN: 0888-5885, DOI: 10.1021/ie010722e cited in the application

## Description

The present invention relates to a method of preparing acetylene (C₂H₂).

Various methods of preparing acetylene are known in the art.

As an example, the article by H. Schobert in Chem. Rev. 2014, 114, pages 1743-1760 provides an overview of the production of acetylene and acetylene-based chemicals from coal. A problem associated with coal-based processes for preparing acetylene is that several contaminants appear in the (intermediate) products, as a result of which the products need further purification and the recycling of intermediate products is not optimal. As a mere example, Schobert mentions that the recycle of Ca(OH)₂ for carbide production is limited to a maximum of 60% to avoid accumulation of impurities (see bottom of right-hand column of page 1744). This limited recycling leads to an undesired high CO₂ footprint (weight of CO₂ per unit weight of acetylene), presents environmental challenges and requires addition of fresh CaO, typically obtained by calcination of CaCO₃ (CaCO₃ -> CaO + CO₂).

Further, EP3029016A1 (Bestrong International Limited) discloses a method of producing acetylene or ethylene starting from methane that originates from fermentable and/or combustible waste, whilst using a catalyst system for conversion of the methane to carbon (as an intermediate product). A problem with catalyst-based methane-to-carbon conversion processes is that catalyst traces will appear in the carbon produced thereby resulting in loss of catalyst and requiring further purification of the catalyst-contaminated products obtained in the process of preparing acetylene. Dependent on the catalyst used, these catalyst traces in the carbon and other products may also result in undesired byproducts (and a lower yield of acetylene) while byproducts need to be separated as well.

It is an object of the present invention to overcome or minimize one or more of the above problems.

It is a further object of the present invention to provide an alternative method for producing acetylene, resulting in less impurities in the acetylene and intermediate products (such as carbon, CaC₂, Ca(OH)₂ and CaO) obtained and wherein more recycling of intermediate products (such as Ca(OH)₂) can be arranged.

One or more of the above or other objects can be achieved by providing a method of preparing acetylene (C₂H₂), the method at least comprising the steps of:
a) providing a methane-containing stream;
b) subjecting the methane-containing stream provided in step a) to non-catalytic pyrolysis, thereby obtaining carbon and hydrogen;
c) reacting the carbon obtained in step b) with CaO, thereby obtaining CaC₂ and CO;
d) reacting the CaC₂ obtained in step c) with H₂O, thereby obtaining acetylene (C₂H₂) and Ca(OH)₂;
e) decomposing the Ca(OH)₂ obtained in step d), thereby obtaining CaO and H₂O;
f) using the CaO as obtained in step e) in the reaction of step c).

It has surprisingly been found according to the present invention that the acetylene produced (in step d)), as well as the intermediate products as obtained in the other steps, contain a relatively low amount of impurities (such as ash content). Furthermore, recycling of intermediate products such as CaC₂, Ca(OH)₂ and CaO can be done to a relatively high extent as the carbon obtained and used in the method according to the present invention has a very low ash content (see also Table 1 hereafter).

Also, the carbon obtained using non-catalytic pyrolysis has a relatively high surface area (typically in the range of from 60 to 120 m²/g as determined in accordance with the well-known BET physisorption technique such as described in e.g. "Adsorption of gases in multimolecular layers" by S. Brunauer, P.H. Emmett and E. Teller, Journal of American Chemical Society, 60 (1938) 309-319) and small average particle size when compared to carbon (or coke) obtained from coal or using catalytic pyrolysis, resulting in a higher reactivity of the carbon (and consequently in lower operating temperatures).

The effect of particle size of coke, ash content in the coke and its impact on the reactivity with CaO to CaC₂ has been reported in:
- "Production of Calcium Carbide from fine Biochars" by G. Li et al., Angew. Chem. Int. Ed. 2010, 49, 8480-8483; and
- "CaC2 production from pulverized coke and CaO at low temperatures - Reaction mechanisms" by Z. Liu et al., Industrial & Engineering Chemistry Research 51 (2012), 10742-10747.

In step a) of the method according to the present invention, a methane-containing stream is provided. The person skilled in the art will readily understand that this methane-containing stream can vary widely and may contain additional components dependent on the origin.

Typically, the methane-containing stream provided in step a) comprises at least 30 mol.% methane, preferably at least 50 mol.%, more preferably at least 70 mol.%, even more preferably at least 90 mol.% methane.

Also, it is preferred that the methane-containing stream provided in step a) comprises at most 500 ppm H₂S, preferably at most 200 ppm, more preferably at most 100 ppm, even more preferably at most 50 ppm, yet even more preferably at most 25 ppm.

Further, it is preferred that the methane-containing stream provided in step a) comprises at most 10 mol.% nitrogen (N₂), more preferably at most 5 mol.%, preferably at most 2 mol.%. Also, it is preferred that the methane-containing stream comprises at most 5 mol.% CO₂, preferably at most 1 mol.%. Further, it is preferred that the methane-containing stream comprises at most 1 mol.% CO.

In a particularly preferred embodiment of the present invention, the methane-containing stream provided in step a) is a refinery off-gas stream (thereby reducing the carbon footprint of the refinery in question). Typically, such a refinery off-gas stream comprises at least 30 mol.% methane, at least 15 mol.% ethane, at least 5 mol.% ethylene and at least 5 mol.% hydrogen (H₂).

In step b), the methane-containing stream provided in step a) is subjected to non-catalytic pyrolysis, thereby obtaining carbon and hydrogen.

As the person skilled in the art is familiar with non-catalytic pyrolysis, this is not discussed here in detail. A general description of non-catalytic pyrolysis is discussed in for example:
- "Hydrogen production by methane decomposition. A review." by H.F. Abbas et al., International Journal of Hydrogen Energy 35 (2010), 1160-1190; and
- "Plasma pyrolysis of methane to hydrogen and carbon black" by J.R. Fincke et al., Industrial & Engineering Chemistry Research 41 (2002), 1425-1435.

The person skilled in the art will readily understand that the non-catalytic pyrolysis of step b) can be performed at a wide range of temperatures. Typically, the non-catalytic pyrolysis of step b) is performed at a temperature of at least 800°C. Preferably, the non-catalytic pyrolysis of step b) is performed at a temperature of at least 900°C, preferably at least 1000°C, more preferably at least 1100°C, even more preferably at least 1300°C. Typically, the temperature in step b) is at most 2000°C.

Further, it is preferred that an electric arc furnace is used, wherein renewable electricity (i.e. from a renewable source) is used.

The person skilled in the art will readily understand that the non-catalytic pyrolysis of step b) can be performed at a wide range of pressures. Preferably, the non-catalytic pyrolysis of step b) is performed at a pressure of less than 10 bara, more preferably less than 5 bara, even more preferably at atmospheric pressure.

The carbon obtained in step b) is further reacted in step c) as mentioned below, whilst the hydrogen (H₂) can be sold as product stream or used in a separate process.

In step c), the carbon obtained in step b) is reacted with CaO, thereby obtaining CaC₂ and CO.

As the person skilled in the art is familiar with the reaction of C and CaO into CaC₂ and CO, this is not discussed here in detail. A general description of this reaction is discussed in for example "Calcium Carbide: A unique reagent for organic synthesis and nanotechnology" by K.S. Rodygin et al., Chemistry - An Asian Journal, 2016, 11, 965-976. Typical conditions for the reaction include temperatures in the range of from 1000° to 2200°C, generally between 1400°C and 1850°C, and pressures in the range of from 1 to 2 bara. Preferably, renewable electricity (i.e. from a renewable source) is used in step c). The CO obtained in step c) can be sold as product stream or used in a separate process, whilst the CaC₂ is further used in step d). Typically, carbon and CaO are used in stoichiometric amounts in step c).

Typically, the carbon as used in step c) has an average particle size of at most 2 mm, preferably at most 1 mm, more preferably at most 0.5 mm. This small average particle size is obtained by the use of the non-catalytic pyrolysis process as used in step b). The advantage of this small average particle size for the carbon is that it results in a higher reactivity of the carbon and consequently allows for lower operating temperatures. See in this respect also the article by Z. Liu in Industrial & Engineering Chemistry Research as mentioned above.

Preferably, the ash content of the carbon used in step c) is below 2.0 wt.%, preferably below 1.0 wt.%, more preferably below 0.6 wt.%.

In step d), the CaC₂ obtained in step c) is reacted with H₂O, thereby obtaining acetylene (C₂H₂) and Ca(OH)₂. As the person skilled in the art is also familiar with the reaction of CaC₂ with H₂O into acetylene and Ca(OH)₂, this is not discussed here in detail. A general description of this reaction is discussed in for example US6294148. Typical conditions for the reaction include temperatures in the range of from 20 to 90°C (preferably above 50°C, more preferably above 70°C) and pressures in the range of from 0.5 to 2 bara, preferably above 1.3 bara and preferably below 1.5 bara. The acetylene obtained can be sold as product stream (or converted in other products) or used in a separate process, whilst the Ca(OH)₂ is further used in step e). Examples of other products that can be obtained based on acetylene are described in Section 5 ("Conversion of acetylene to commodity chemicals and materials") of the above-mentioned article by Schobert in Chemical Reviews.

An important advantage of the present invention is that the acetylene, CO and Ca(OH)₂ contain relatively little impurities when compared to e.g. the coal-based processes. Typically, the Ca(OH)₂ contains an ash content of at most 2.0 wt.%.

As a result of the relatively low content of impurities, at least 65 mol.% of the Ca(OH)₂ as obtained in step d) is used in the decomposition of step e), preferably at least 70%, more preferably at least 80%, even more preferably at least 90%, yet even more preferably at least 95%. Please note in this respect the teaching in the above-mentioned article by Schobert in Chemical reviews that "*Recycle* [of Ca(OH)₂] *is limited to a maximum of ~60%, to avoid accumulation of impurities in the furnace*" at the bottom of the right-hand column of page 1744. Increased recycling of Ca(OH)₂ thus helps to avoid fresh use of CaO (typically obtained from CaCO₃) and thus lowers CO₂ footprint.

In step e), the Ca(OH)₂ obtained in step d) is decomposed, thereby obtaining CaO and H₂O.

As the person skilled in the art is also familiar with the decomposition of Ca(OH)₂ into CaO and H₂O, this is not discussed here in detail. A general description of this decomposition is discussed in for example "Thermal dehydration of calcium hydroxide. 2. Surface area evolution" by A. Irabien et al., Ind. Eng. Chem. Res. 1990, 29, 1606-1611. Typical conditions for the decomposition include temperatures in the range of from 500 to 600°C and pressures in the range of from 1 to 2 bara.

Preferably, the H₂O obtained in step e) is used in the reaction of step d).

In step f), the CaO as obtained in step e) is used in the reaction of step c).

Preferably, at least 80 mol.% of the CaO as obtained in step f) is used in the reaction of step c), preferably at least 85 mol.%, more preferably at least 95 mol.%.

Hereinafter the present invention will be further illustrated by the following non-limiting drawings. Herein shows:

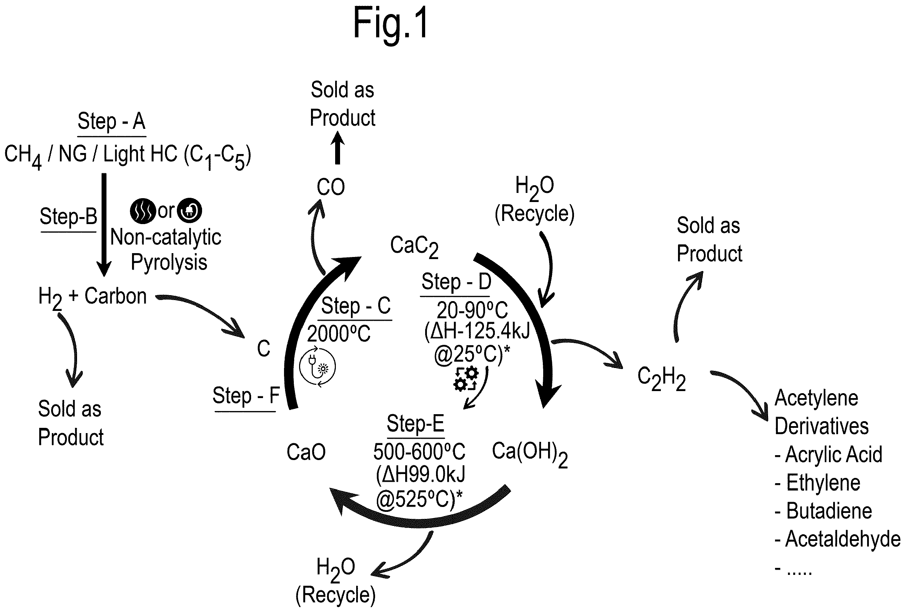

Fig. 1 schematically a flow scheme of an embodiment of the method of preparing acetylene according to the present invention.

As shown in Fig. 1, a methane-containing stream is provided and subjected to non-catalytic pyrolysis, thereby obtaining carbon and hydrogen (the latter can e.g. be sold as product).

The obtained carbon is reacted with CaO (preferably using renewable electricity), thereby obtaining CaC₂ and CO. The CO may be sold as a separate product. The CaC₂ is (after possible temporary storing) with H₂O, thereby obtaining acetylene (C₂H₂) and Ca(OH)₂.

The acetylene may be sold as a separate product or used to produce derivative compounds. The Ca(OH)₂ is decomposed thereby obtaining CaO and H₂O (the latter may be recycled). The CaO is reused in the reaction with carbon.

Hereinafter the invention will be further illustrated by the following non-limiting examples.

### Examples

### Production of carbon

### Comparative Example 1

A commercially available carbon powder of high level purity (GF44538295-1EA; 99.997% purity) was obtained from Sigma Aldrich. The carbon powder had a particle size of about 0.075 mm. There was no information available on how the carbon was obtained.

### Comparative Example 2

A methane-containing stream (1 Nl/hour CH₄ and 1 Nl/h N₂; i.e. containing 50 mol.% methane and 50 mol.% N₂), was subjected to non-catalytic pyrolysis in a bubble column molten salt reactor (made from alumina) of 1 inch diameter containing molten NaCl (99% pure; commercially available from Sigma Aldrich/Merck (Darmstadt, Germany)) and dispersed iron nanoparticles (99.9% pure, with an average particles distribution of 20 nm; commercially available from Sky-Spring Nanomaterials (Houston, USA)). The amount of dispersed iron nanoparticles was 1 wt.% of the total NaCl salt weight.

The NaCl salt was dried and mixed with the iron particles in an oxygen-free gloves box and then loaded as a powder into the reactor.

After melting of the salt, the methane-containing gas stream was introduced at the bottom of the reactor (at about 1000°C) via a deep tube of 1/8 inch (0.32 cm), positioned at the centre of the reactor. The gas flow rate was controlled at about 2 Nl/h.

The carbon material (particle size of about 0.30 mm) produced during the pyrolysis floated on top of the molten salt region of the reactor and was recovered after cooling down of the reactor to room temperature. The carbon was washed with DI (deionized) water until the pH of recovered water was back to 5.5 to remove excess salt contaminant.

### Example 1

A methane-containing stream (containing 93.75 mol.% methane and 6.25 mol.% N₂, no H₂S) was subjected to non-catalytic pyrolysis in an empty (i.e. no catalyst) reactor tube (made from alumina) with an internal diameter of 1 cm and a length of 1 m. The isothermal zone of the reactor was 60 cm long.

The methane-containing gas stream was passed through the reactor at a flow rate of 4.6 Nl/h at a temperature of 1400°C and a pressure slightly above ambient (1.1 barg). At this temperature the methane started to crack, producing solid carboneous material that deposited on the wall of the reactor tube. The cracking was continued until a pressure build-up was observed, indicating that the reactor was getting blocked by solid material. The gas flow and the heating was stopped and after cooling down the carbon material was recovered from the reactor.

The properties of the various carbon samples are given in Table 1 below. As can be seen, the carbon samples as generated according to the present invention result in a significantly lower ash content.

The ash content and moisture content of the carbon samples was determined according to Chinese National Standards GB/T 476-2001 and GB/T 212-2008.

**Table 1. Properties of carbon**

| | C. Ex. 1 | C. Ex. 2 | Ex. 1 |
|---|---|---|---|
| C¹ [wt.%] | 99.5 | 98.4 | 99.7 |
| Moisture² [wt.%] | 0.1 | 1.1 | 0.3 |
| Ash content² [wt.%] | 0.4 | 0.5 | 0.0 |
| Particle size [mm] | 0.075 (200-500 mesh) | 0.3-0.5 | 0.3-0.5 |
| Carbon surface area3 | | 90 | 90 |

| | | | |
|---|---|---|---|
| ¹As determined according to Chinese National Standard GB/T 476-2001. ²As determined according to Chinese National Standard GB/T 212-2008. ³As determined according to BET surface area measurement. | | | |

The person skilled in the art will readily understand that many modifications may be made without departing from the scope of the invention which is defined in the claims.

## Claims

1. A method of preparing acetylene (C₂H₂), the method at least comprising the steps of:
a) providing a methane-containing stream;
b) subjecting the methane-containing stream provided in step a) to non-catalytic pyrolysis, thereby obtaining carbon and hydrogen;
c) reacting the carbon obtained in step b) with CaO, thereby obtaining CaC₂ and CO;
d) reacting the CaC₂ obtained in step c) with H₂O, thereby obtaining acetylene (C₂H₂) and Ca(OH)₂;
e) decomposing the Ca(OH)₂ obtained in step d), thereby obtaining CaO and H₂O;
f) using the CaO as obtained in step e) in the reaction of step c).

2. The method according to claim 1, wherein the methane-containing stream provided in step a) comprises at least 30 mol.% methane, preferably at least 50 mol.%, more preferably at least 70 mol.%, even more preferably at least 90 mol.% methane.

3. The method according to claim 1 or 2, wherein the methane-containing stream provided in step a) comprises at most 500 ppm H₂S, preferably at most 200 ppm, more preferably at most 100 ppm, even more preferably at most 50 ppm, yet even more preferably at most 25 ppm.

4. The method according to any one of the preceding claims, wherein the non-catalytic pyrolysis of step b) is performed at a temperature of at least 900°C, preferably at least 1000°C, more preferably at least 1100°C, even more preferably at least 1300°C.

5. The method according to any one of the preceding claims, wherein the carbon as used in step c) has an average particle size of at most 2 mm, preferably at most 1 mm.

6. The method according to any one of the preceding claims, wherein at least 65 mol.% of the Ca(OH)₂ as obtained in step d) is used in the decomposition of step e), preferably at least 70%, more preferably at least 80%, even more preferably at least 90%, yet even more preferably at least 95%.

7. The method according to any one of the preceding claims, wherein the H₂O obtained in step e) is used in the reaction of step d).

## Patentansprüche

1. Verfahren zum Herstellen von Acetylen (C₂H₂), das Verfahren mindestens umfassend die Schritte:
a) Bereitstellen eines methanhaltigen Stroms;
b) Unterziehen des in Schritt a) bereitgestellten methanhaltigen Stroms einer nicht katalytischen Pyrolyse, wodurch Kohlenstoff und Wasserstoff erhalten werden;
c) Reagiern des in Schritt b) erhaltenen Kohlenstoffs mit CaO, wodurch CaC₂ und CO erhalten wird;
d) Reagieren des in Schritt c) erhaltenen CaC₂ mit H₂O, wodurch Acetylen (C₂H₂) und Ca(OH)₂ erhalten wird;
e) Zerlegen des in Schritt d) erhaltenen Ca(OH)₂, wodurch CaO und H₂O erhalten werden;
f) Verwenden des in Schritt e) erhaltenen CaO in der Reaktion von Schritt c).

2. Verfahren nach Anspruch 1, wobei der in Schritt a) bereitgestellte methanhaltige Strom mindestens umfasst:
zu 30 Mol-% Methan, vorzugsweise mindestens zu 50 Mol-%, stärker bevorzugt mindestens zu 70 Mol-%, noch stärker bevorzugt mindestens zu 90 Mol-% Methan.

3. Verfahren nach Anspruch 1 oder 2, wobei der in Schritt a) bereitgestellte methanhaltige Strom höchstens zu 500 ppm H₂S, vorzugsweise höchstens zu 200 ppm, stärker bevorzugt höchstens zu 100 ppm, noch stärker bevorzugt höchstens
zu 50 ppm, sogar noch stärker bevorzugt höchstens zu 25 ppm umfasst.

4. Verfahren nach einem der vorstehenden Ansprüche, wobei die nicht katalytische Pyrolyse von Schritt b) bei einer Temperatur von mindestens 900 °C, vorzugsweise mindestens 1000 °C, stärker bevorzugt mindestens 1100 °C, noch stärker bevorzugt mindestens 1300 °C durchgeführt wird.

5. Verfahren nach einem der vorstehenden Ansprüche, wobei der Kohlenstoff, wie in Schritt c) verwendet, eine durchschnittliche Partikelgröße von höchstens 2 mm, vorzugsweise höchstens 1 mm aufweist.

6. Verfahren nach einem der vorstehenden Ansprüche, wobei mindestens zu 65 Mol-% des wie in Schritt d) erhaltenen Ca(OH)₂, vorzugsweise mindestens zu 70 %, stärker bevorzugt mindestens zu 80 %, noch stärker bevorzugt mindestens zu 90 %, sogar noch stärker bevorzugt mindestens zu 95 %, bei der Zerlegung von Schritt e) verwendet wird.

7. Verfahren nach einem der vorstehenden Ansprüche, wobei das in Schritt e) erhaltene H₂O in der Reaktion von Schritt d) verwendet wird.

## Revendications

1. Procédé de préparation d'acétylène (C₂H₂), le procédé comprenant au moins les étapes consistant à :
a) fournir un flux contenant du méthane ;
b) soumettre le flux contenant du méthane fourni à l'étape a) à une pyrolyse non catalytique, permettant ainsi d'obtenir du carbone et de l'hydrogène ;
c) faire réagir le carbone obtenu à l'étape b) avec CaO, permettant ainsi d'obtenir CaC₂ et CO ;
d) faire réagir le CaC₂ obtenu à l'étape c) avec H₂O, permettant ainsi d'obtenir de l'acétylène (C₂H₂) et Ca(OH)₂ ;
e) décomposer le Ca(OH)₂ obtenu à l'étape d), permettant ainsi d'obtenir CaO et H₂O ;
f) utiliser le CaO tel qu'obtenu à l'étape e) dans la réaction de l'étape c).

2. Procédé selon la revendication 1, dans lequel le flux contenant du méthane fourni à l'étape a) comprend au moins
30 % molaire de méthane, de préférence au moins 50 % molaire, plus préférablement au moins 70 % molaire, encore plus préférablement au moins 90 % molaire de méthane.

3. Procédé selon la revendication 1 ou 2, dans lequel le flux contenant du méthane fourni à l'étape a) comprend au plus 500 ppm de H₂S, de préférence au plus 200 ppm, plus préférablement au plus 100 ppm, encore plus préférablement au plus
50 ppm, encore plus préférablement au plus 25 ppm.

4. Procédé selon l'une quelconque des revendications précédentes, dans lequel la pyrolyse non catalytique de l'étape b) est effectuée à une température d'au moins 900 °C, de préférence d'au moins 1000 °C, plus préférablement d'au moins 1100 °C, encore plus préférablement d'au moins 1300 °C.

5. Procédé selon l'une quelconque des revendications précédentes, dans lequel le carbone tel qu'utilisé dans l'étape c) a une taille moyenne de particules d'au plus 2 mm, de préférence d'au plus 1 mm.

6. Procédé selon l'une quelconque des revendications précédentes, dans lequel au moins 65 % molaire du Ca(OH)₂ tel qu'obtenu à l'étape d) est utilisé dans la décomposition de l'étape e), de préférence au moins 70 %, plus préférablement au moins 80 %, encore plus préférablement au moins 90 %, encore plus préférablement au moins 95 %.

7. Procédé selon l'une quelconque des revendications précédentes, dans lequel H₂O obtenu à l'étape e) est utilisé dans la réaction de l'étape d).
